# EUROPEAN PATENT SPECIFICATION

(11) **EP 1 810 533 B1**
(45) Date of publication and mention of the grant of the patent: **31.12.2008**
(21) Application number: 05802623.8
(22) Date of filing: 11.11.2005
(51) Int. Cl.: H04Q 7/22

(54) **TELECOMMUNICATIONS SERVICES APPARATUS AND METHOD**
VORRICHTUNG UND VERFAHREN FÜR TELEKOMMUNIKATIONSDIENSTE
APPAREIL DESTINE A DES SERVICES DE TELECOMMUNICATIONS ET PROCEDE CORRESPONDANT

(30) Priority: 12.11.2004 GB 0425021; 15.11.2004 GB 0425149
(43) Date of publication of application: 25.07.2007
(73) Proprietor: INTELLPROP LIMITED, Warsash Hampshire SO31 9HN (GB)
(72) Inventor: WILSON, Jeffrey, Hampshire PO16 7OH (GB)
(74) Representative: Lewis, Darren John
(86) International application number: PCT/GB2005/004348
(87) International publication number: WO 2006/051304

(56) References cited:
- US-A1- 2003 050 080
- US-A1- 2003 105 825
- US-A1- 2004 171 393
- US-B1- 6 646 999

## Description

This invention relates to telecommunications services apparatus and methods for use with a mobile telecommunications system, such as a mobile telephone system. The invention is applicable in particular to the GSM mobile telephony system, although in principle the technique could be applied to other types of mobile network.

Messaging on mobile networks, and in particular text messaging, has grown significantly since its introduction. It is foreseen that in the future, advanced services will continue to fuel this growth as users find that the mobile terminal becomes increasingly useful for a variety of aspects of lifestyle, communication and information retrieval.

Both voice and text messaging are commonly used by subscribers of mobile telephone networks. Interconnection between many networks has permitted message transmission between subscribers of different networks, and in some cases also between networks of differing technologies, such as GSM and CDMA. GSM is well defined and specified by international standards, which define the functional blocks and the signalling messages that pass between them. Support for the composition, transmission and reception of text messages is present in the majority of GSM mobile terminals.

Text messaging requires alphanumeric entry using the standardised Man Machine Interface (MMI) of the mobile handset, and also requires that the message be addressed to the desired recipient. The destination address for the message may typically be specified either by entering a Mobile Station ISDN number (MSISDN) that is the mobile telephone number of the desired recipient, or by selecting an entry from the handset's address book that already has the desired MSISDN preprogrammed in. The address book normally provides the MSISDN by using alphanumeric look-up of a name.

Currently, the predominant usage of messaging services on mobile networks is for person-to-person texts messaging, which in the case of GSM networks is supported by the Short Message Services (SMS). SMS defines signalling messages within the Mobile Application Protocol (MAP) for transferring the Short Message in Mobile Originated (MO) mode between the Mobile Handset and the Short Message Service Centre and in Mobile Terminated (MT) mode between the Short Message Service Centre and the Mobile Handset. Comparable messaging technologies exist for other mobile network architectures, and next generation messaging systems for GSM (Enhanced Messaging Services EMS, and Multimedia Messaging Services MMS) have being introduced, and video messaging will follow. Collectively these are referred to as text messaging services.

GSM networks are specified in the relevant standards, and these recommend that the GSM short messaging services (SMS) are implemented by a store and forward device known as a Short Message Service Centre (SMSC.) This technique is analogous to recorded voicemail, and was most beneficial in the early days of GSM, when handsets were less portable than they are today, battery life was poor and radio coverage was limited. At that time only a small, proportion of text messages were deliverable at the first attempt, and so a store and forward device was appropriate. Today the converse is true, and many networks report that 80% or more of messages are deliverable on the first attempt.

Other uses of text messaging services include person to Host, and Host to person, where a Host is a network equipment or third party equipment designed to source and/or sink text messages. Hosts typically provide message collection facilities for voting events, competitions or information services and/or message source facilities for subscription services or advertising. It is common at the moment for text messages to be delivered to terminating hosts over IP networks using SMSC based protocols, although some companies offer email delivery to hosts over the public Internet. Text message interaction with Host applications, for example for voting, purchases, or entertainment is increasingly common, and interaction with Host applications is beginning to grow in the same way as it has previously on fixed networks in response to the development of premium rate services.

Information services may require a user to send a text message to a specified number or short code, causing the network to direct the message to a particular Host service. The Host then responds to the message with the required information and the reply is transmitted back to the user. Alternatively a subscription service may be invoked, whereby the Host sends a number of information messages over a period of time as requested by the user. Charging for such services is achieved in a number of ways, including premium rate charging for the user request and/or 'reverse' billing of the user for the reply.

US 2003/0105825A1 describes policy based management of messages in mobile data networks, wherein one of a plurality of modes for delivery of a message to an intended destination is made in accordance with a decision factor based upon characteristics parsed from the message.

A technique known as Virtual Mobile works by providing a Home Location register (HLR) function for a virtual telephone number, i.e. one that is not necessarily associated with a real physical telephone terminal. The standard routing operations of GSM deliver a call or message to the correct network node by querying the HLR in order to determine the location of a telephone. By arranging for the HLR to respond to queries relating to Virtual Mobile numbers by returning the address of a network node designated for handling Virtual Mobile calls or messages, access to this network node becomes possible from any network. Virtual Mobile allows text messages addressed to host equipment in a network A to be sent from any network. Virtual Mobile systems to date have been focussed on text connectivity although the technique of voice call re-direction is known. Voice call re-direction allows a normal voice telephone call to be made to a Virtual Mobile number.

It is known that short message transmission between fixed and mobile networks is possible. The fixed network operator that wishes to enable this functionality must currently install specialised network equipment, and supply suitable terminals, that allow text messages to be transmitted over normal telephone lines to fixed terminals using modem techniques. Alternatively, text messaging to a fixed telephone may be achieved using a text to voice sub-system that allows the message to be delivered as a normal voice call.

SMS Hosts are used for a wide variety of applications including voting, competitions and Interactive TV. By their association with mass media and their appeal to the general public, some SMS applications can generate very high volumes of SMS traffic between users and SMS Hosts. In many cases this has led to overloading of existing SMSC-based infrastructure and a reduction in quality of service for all users. In many cases overload has resulted in large numbers of messages being discarded by some networks even though the senders may have already been charged.

A major limitation of traditional SMS architectures involving only store and forward delivery of SMS, as originally envisaged in the specifications, is that the message store element is in the sender's network not the receiver's. There are thousands of SMSCs in the many networks worldwide, and while a handset is unavailable there may be a message waiting in any one of them. Therefore, at least from a recipient's point of view, this architecture is inappropriate for doing anything intelligent with a waiting message other than continuing to wait. Furthermore, when a recipient is roaming, a message sent to him from any network other than his home network does not even pass through his home network.

It is an aim of at least an embodiment of the present invention to solve some of these problems, particularly in relation to improving the quality and timeliness of service.

According to a first aspect of the invention as set out in claim 1, there is provided a telecommunications services apparatus for use with a mobile telecommunications network, the apparatus comprising means for receiving a text message for delivery to an intended destination, and means for selecting one of a plurality of attempt or reattempt delivery modes for delivery of the text message to the intended destination in accordance with at least one decision factor. The at least one decision factor is based on a criterion other than a characteristic of the text message being sent, and the means for selecting is operable to implement a modified retry schedule as the selected delivery mode based on the at least one decision factor.

According to a second aspect of the invention as set out in claim 17, there is provided a telecommunications method for a mobile telecommunications network, the method comprising receiving a text message for delivery to an intended destination, and selecting one of a plurality of attempt or reattempt delivery modes for delivery of the text message to the intended destination in accordance with at least one decision factor. The at least one decision factor is based on a criterion other than a characteristic of the text message being sent, and the method includes implementing a modified retry schedule as the selected delivery mode based on the at least one decision factor.

According to further aspects of the invention, the decision factors may include but are not limited to:
■ available signalling capacity or a measure of signalling load at one or more nodes in the network
■ the class of service or priority of the sender, or of the recipient, or both, where the respective person is a subscriber to the network
■ the recent message reception history of the intended recipient of the said message, where the intended recipient is a subscriber to the network
■ the recent message reception history of a recipient of the said message, where the respective person is a not a subscriber to the network but the sender is.

According to a further aspect of the invention, operation of delivery attempts or re-delivery attempts may be made dependent on the decision factors, for example a modified retry schedule may be used according to certain decision factors or combinations thereof.

According to a further aspect of the invention, the apparatus may be operable to temporarily store the IMSI and VLR address relating to a first message delivery to a selected recipient, and under certain conditions according to said decision factors, to use the stored IMSI and VLR address in preference to querying the HLR to determine an IMSI and VLR address for a subsequent message delivery, and thereby to reduce network and HLR signalling load.

According to a further aspect of the invention, stored IMSI and VLR addresses may be invalidated, preferably after a period of non-use, or when a message delivery using the stored values is unsuccessful, or unsuccessful with one of a certain set of returned failure codes.

According to a further aspect of the invention, the decision factors and/or the attempted delivery or attempted re-delivery behaviour may be applicable to both an MO (mobile originated) Store or an MT (mobile terminated) Store or both.

Other aspects of the invention include a computer program having computer executable instructions, which when loaded on to a computer is operable to cause the computer to perform the above method, and a computer program product comprising a computer readable medium having recorded thereon information signals representative of the computer program.

A preferred embodiment of the invention provides a technique allowing an operator to be able to provide a higher quality of service to the network's most valuable customers particularly in respect of delivery delay and regularity of delivery attempts.

There has previously been no possibility of prioritising certain host-originated traffic over other traffic. Indeed, in most networks there has been no way to prioritise person-to-person traffic over host-originated traffic, and since both types of traffic normally pass through the same SMSCs it is common for peaks in host traffic to interfere with person-to-person traffic.

The preferred embodiment allow improvement of quality and timeliness of service for selected priority customers, either as senders or recipients or both, although the preferred techniques could also be applied to an operator's entire user base.

The invention will now be described by way of example with reference to the accompanying drawings, throughout which like parts are referred to by like references, and in which:
Figure 1 is a block diagram of telecommunications services apparatus according to an embodiment of the invention; and
Figure 2 is a block diagram of telecommunications services apparatus according to another embodiment of the invention.

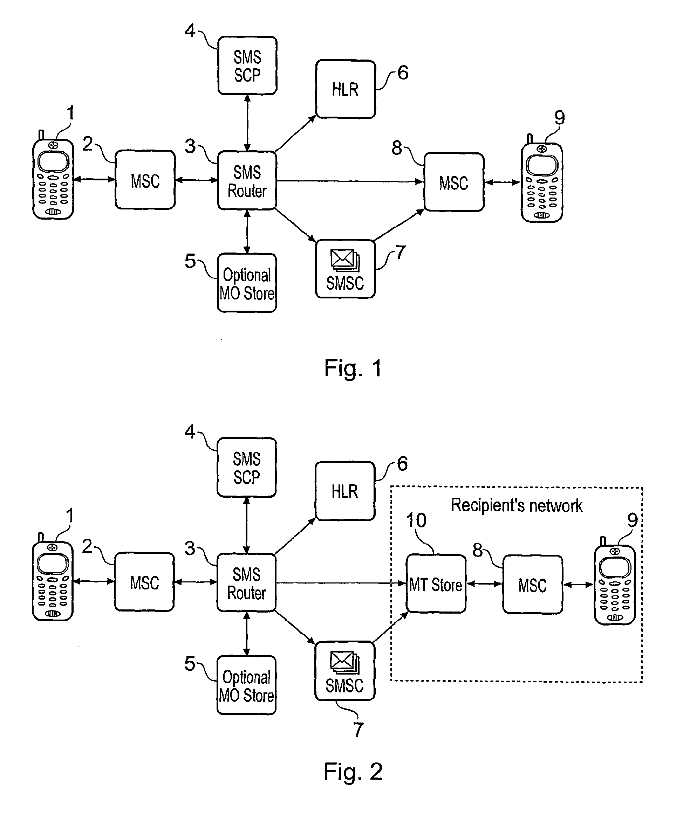

Figure 1 shows a sender's mobile terminal 1 connected via a mobile switching centre (MSC) 2 and an SMS router 3 through which mobile originated messages pass. An SMS service control point (SCP) 4 may provide centralised intelligence for one or more SMS routers 3 in the network, and may determine information such as the current SMS loading on the network, the recent reception history for some or all recipients, and for caching IMSI and VLR data for some or all recipients. The SMS router 3 is connected to a home location register HLR) 6 for handling of SRI_SM messages and responses. The SMS router 3 delivers a message either directly to an MSC/VLR 8, or via a short message service centre (SMSC) 7, or via an (optional) MO store 5. In case of unsuccessful delivery to a recipient's terminal 9, the message may be placed in, or may remain in, the SMSC 7 or the MO store 5.

In Figure 2, operation is similar to that of Figure 1, except that message delivery may be directly to a destination such as the terminal 9, or may be to an MT store 10 in the recipient's network.

The SMS router 3 in Figures 1 and 2 may be, for example, a Telsis (RTM) SMS Router, manufactured by Telsis Limited.

The purpose of the present technique is to provide rapid messaging transit and response under a range of circumstances. In the prior art, all messaging users are treated alike, and in busy periods messages can be, and commonly are, delayed by a significant time without regard to the identity of the user. It would be preferable for an operator to be able to prioritise its customers, so that some premium customers could be provided with, for example, better service at all times, and good service even during periods where some users' messages are delayed.

In a preferred embodiment, performance is improved by setting up the SMS router 3 to select one of a plurality of attempt/reattempt delivery modes depending on one or more decision factors, for example to modify the retry schedule for certain stored messages, the messages being chosen according to at least one of the decision factors described below.

It is also an aim of the technique to be able to provide messaging transmit times that are as rapid as possible for those users engaged in a text dialogue. To minimise delay for users who are receiving multiple messages in a short period, the technique proposes that delivery information, including IMSI and VLR address is cached within the SMS router 3 and the SMS SCP 4 sub-system, thereby avoiding the need for an HLR lookup for every delivery. This both speeds up the delivery process to make it almost instant, and also reduces HLR loading. Reducing signalling and network node load in this way would have a particularly beneficial effect during very busy periods such as New Year, when messaging rates in Europe reach their highest annual levels.

In the preferred embodiment of the invention, the SMS router 3 is operable to determine the class of service of the sender and/or the recipient of a message that arrives at the SMS router 3. This information in respect of the recipient is preferably obtained from the HLR 6 during the SRI_SM query that is necessary at least for delivery of a first message, and may be cached for use with subsequent messages for the same recipient. In respect of the sender, this information is preferably received as part of the A-party IMSI and credit check that may carried out during normal message processing. If this is not available or inappropriate in a particular network configuration, then a separate HLR lookup may be required on behalf of the A-party. The information may be cached for use with future messages from the same sender.

Decisions about delivery method, and hence selection of attempt/reattempt delivery mode, may be made by the SMS router 3 and/or the SMS SCP 4, based on one or more decision factors, which may include but are not limited to
■ an estimate of SMS signalling load or available capacity at one or more nodes in the network or in the network in general, for example the HLR loading or the overall message rate may be factors upon which the network operator would wish to modify delivery behaviour, so as to prevent overload while maximising throughput
■ the availability and age of any cached IMSI/VLR information for the intended recipient
■ the class of service/priority of the sender or recipient, or both, which may be stored in the HLR 6 or the SMS SCP 4
■ the past messaging history of the sender or recipient, such that for example parties engaging in an SMS dialogue could obtain preferential or more rapid response than other users
■ the current message delivery success rate

Options for the delivery method that may be selected based on these decision factors include, but are not limited to
1. use of direct delivery avoiding a store and forward apparatus (such as the SMSC 7), in preference to using a store and forward method
2. adoption of alternative retry schedules for messages that have been stored due to non delivery, either in the SMSC 7 or in the MO (mobile originated) store 5 associated with the SMS router 3
3. use of an alternative validity period
4. use of cached information in the delivery process, such as stored VLR and IMSI information for the recipient
5. prioritisation of processing of messages that have been stored due to non delivery

In the case where cached information has been used for the delivery attempt, but the attempt was unsuccessful, this may be because the cached information is out of date.

Indeed this may be inferred from the particular error message received from the VLR. In any case following such an unsuccessful delivery, in a preferred embodiment the cached information may be refreshed by a further HLR lookup and a further delivery attempt. Under certain circumstances, such as when old cached information is used, it may be desirable to perform the first delivery attempt in parallel with refreshing the cached information.

The technique also has particular applicability to text message architectures that employ a message store in the recipient's network in the MT (mobile terminated) path, for example as shown in Figure 2. The MT store 10 provides advantages for the recipient, since during periods of his unavailability, all his messages may be collected in one place instead of being scattered across SMSCs or MO Stores far and wide each with its own retry behaviour. An MT store is also known to be theoretically operable to receive messages from multiple types of media, and provide a unified mailbox facility. However the key advantage of the MT store 10 is that it allows the recipient, and the recipient's network, to have full control over message delivery. Therefore it can be seen that when combined with the present technique, the MT store 10 can provide even better service for the recipient, since attempted deliveries and retries can be made dependent on decision factors such as for example the recipient's priority (class of service) and the network's loading.

Selection of an alternative retry schedule for customers with the required class of service provides particular benefits. It is well-known that under conditions of poor or interrupted radio coverage (such as when entering a tunnel) message delivery may fail and consequently arm the Message Waiting Data mechanism, but resumption of adequate radio coverage is not an event that is noted by any network node, and so the Message waiting delivery mechanism is not triggered by this. Consequently the failed message will not be retried until the next delivery attempt is made according to a retry schedule. For priority customers, the retry schedule can be enhanced so that minimal delay is experienced even in the case illustrated above. As an example, for priority customers, the retry schedule could be adjusted to retry every minute for the first hour and then every 5 minutes thereafter until the message expires or is delivered. This would be a significant improvement in service over the present arrangement, which can have many hours between retries.

As a further enhancement, shorter retry periods could be used if network capacity was available.

In an embodiment of the invention it would also be possible to adaptively vary the delivery methods according to the message success rate in order to maximise the usage of the network. For example if it is known that a delivery rate of X delivery attempts per second is sustainable, the retry schedules for priority customers could be dynamically increased in order to use up all available 'slack' in the system and raise the overall delivery rate close to X attempts per second, thereby providing the best performance possible for those customers under the current conditions.

Further delivery improvements are also possible by intelligently combining information from the network, the subscriber(s) and the message history.

In so far as the embodiment(s) of the invention described above may be implemented, at least in part, using software controlled processing apparatus, it will be appreciated that a computer program providing such software control and a storage medium by which such a computer program is stored are envisaged as aspects of the invention.

## Claims

1. A telecommunications services apparatus for use with a mobile telecommunications network, the apparatus comprising means for receiving a text message for delivery to an intended destination (9), and means for selecting one of a plurality of attempt or reattempt delivery modes for delivery of the text message to the intended destination in accordance with at least one decision factor, **characterised in that** the at least one decision factor is based on a criterion other than a characteristic of the text message being sent and the means for selecting is operable to implement a modified retry schedule as the selected delivery mode based on the at least one decision factor.

2. Apparatus according to claim 1, wherein the at least one decision factor includes a class of service of the sender (1), and/or a class of service of the recipient (9).

3. Apparatus according to claim 1 or claim 2, wherein the at least one decision factor includes a message reception history of the intended message recipient (9), the intended message recipient being a subscriber to the network.

4. Apparatus according to claim 1, claim 2 or claim 3, wherein the at least one decision factor includes a message reception history of the message recipient (9), the sender of the message being a subscriber to the network.

5. Apparatus according to any one of claims 1 to 4, wherein the at least one decision factor includes the available signalling capacity at one or more nodes (2,3,7,8) of the network.

6. Apparatus according to any one of claims 1 to 5, wherein the at least one decision factor includes a measure of the signalling load at one or more nodes (2,3,7,8) of the network.

7. Apparatus according to any one of claims 1 to 6, including storage means (3,4) for temporarily storing address information relating to a first message delivery attempt to a selected recipient, the means for selecting being operable to use the stored address information for subsequent message delivery of a second message to the same selected recipient.

8. Apparatus according to claim 7, wherein the stored address information comprises an IMSI and a VLR address.

9. Apparatus according to claim 7 or claim 8, wherein the stored address information is used in preference to querying an HLR (6) of the network.

10. Apparatus according to claim 7, claim 8 or claim 9, wherein the stored address information is invalidated after a period of non-use of the information, or when a message delivery attempt using the stored address information is unsuccessful.

11. Apparatus according to any one of claims 1 to 10, including a mobile originated store (5) in the network, wherein the attempted or reattempted deliveries involve the mobile originated store.

12. Apparatus according to any one of claims 1 to 11, wherein a mobile terminated store (10) is provided in the message recipient's network and the attempted or reattempted deliveries involve the mobile terminated store.

13. Apparatus according to any one of claims 1 to 12, wherein the means for selecting comprises an SMS router (3).

14. Apparatus according to any one of claims 1 to 13, wherein the means for selecting is operable to attempt direct delivery of the received text message in accordance with the at least one decision factor.

15. Apparatus according to any one of claims 1 to 14, wherein the means for selecting is operable to set an alternative validity period for reattempted delivery of a received text message, in accordance with the at least one decision factor.

16. Apparatus according to any one of claims 1 to 15, wherein the means for selecting is operable to adaptively vary the methods of delivery according to the message success rate.

17. A telecommunications method for a mobile telecommunications network, the method comprising receiving a text message for delivery to an intended destination (9), and selecting one of a plurality of attempt or reattempt delivery modes for delivery of the text message to the intended destination in accordance with at least one decision factor, **characterised in that** the at least one decision factor is based on a criterion other than a characteristic of the text message being sent, and by including implementing a modified retry schedule as the selected delivery mode based on the at least one decision factor.

18. A method according to claim 17, wherein the at least one decision factor includes a class of service of the sender (1), and/or a class of service of the recipient (9).

19. A method according to claim 17 or claim 18, wherein the at least one decision factor includes a message reception history of the intended message recipient (9), the intended message recipient being a subscriber to the network.

20. A method according to claim 17, claim 18 or claim 19, wherein the at least one decision factor includes a message reception history of the message recipient (9), the sender of the message being a subscriber to the network.

21. A method according to any one of claims 17 to 20, wherein the at least one decision factor includes the available signalling capacity at one or more nodes (2,3,7,8) of the network.

22. A method according to any one of claims 17 to 21, wherein the at least one decision factor includes a measure of the signalling load at one or more nodes (2,3,7,8) of the network.

23. A method according to any one of claims 17 to 22, including temporarily storing address information relating to a first message delivery attempt to a selected recipient, the stored address information being used for subsequent message delivery of a second message to the same selected recipient.

24. A method according to claim 23, wherein the stored address information comprises an IMSI and a VLR address.

25. A method according to claim 23 or claim 24, wherein the stored address information is used in preference to querying an HLR (6) of the network.

26. A method according to claim 23, claim 24 or claim 25, wherein the stored address information is invalidated after a period of non-use of the information, or when a message delivery attempt using the stored address information is unsuccessful.

27. A method according to any one of claims 17 to 26, wherein the attempted or reattempted deliveries involve a mobile originated store (5) in the network.

28. A method according to any one of claims 17 to 27, wherein the attempted or reattempted deliveries involve a mobile terminated store (10) in the message recipient's network.

29. A method according to any one of claims 17 to 28, wherein message delivery is effected by an SMS router (3).

30. A method according to any one of claims 17 to 29, wherein direct delivery of the received text message is attempted in accordance with the at least one decision factor.

31. A method according to any one of claims 17 to 30, wherein an alternative validity period is set for reattempted delivery of a received text message, in accordance with the at least one decision factor.

32. A method according to any one of claims 17 to 31, wherein the methods of delivery are adaptively varied according to the message success rate.

33. A computer program having computer executable instructions which when loaded on to a computer is operable to cause the computer to perform the method according to any one of claims 17 to 32.

34. A computer program product having a computer readable medium having recorded thereon information signals representative of the computer program according to claim 33.

## Patentansprüche

1. Telekommunikationsdienstevorrichtung zur Verwendung mit einem mobilen Telekommunikationsnetz, wobei die Vorrichtung eine Einrichtung zum Empfangen einer Textnachricht für das Zustellen an ein beabsichtigtes Ziel (9) und eine Einrichtung zum Auswählen eines aus einer Mehrzahl von Modi der versuchten oder erneut versuchten Zustellung für das Zustellen der Textnachricht an das beabsichtigte Ziel gemäß wenigstens einem Entscheidungsfaktor aufweist, **dadurch gekennzeichnet, daß** der wenigstens eine Entscheidungsfaktor auf einem Kriterium basiert, welches kein Merkmal der gerade gesendeten Textnachricht ist, und daß die Einrichtung zum Auswählen so betreibbar ist, daß sie einen modifizierten Wiederholungsplan als den ausgewählten Zustellungsmodus auf Basis des wenigstens einen Entscheidungsfaktors implementiert.

2. Vorrichtung nach Anspruch 1, wobei der wenigstens eine Entscheidungsfaktor eine Benutzerklasse des Senders (1) und/oder eine Benutzerklasse des Empfängers (9) beinhaltet.

3. Vorrichtung nach Anspruch 1 oder Anspruch 2, wobei der wenigstens eine Entscheidungsfaktor eine Nachrichtenempfangs-Vorgeschichte des beabsichtigten Nachrichtenempfängers (9) beinhaltet, wobei der beabsichtigte Nachrichtenempfänger ein Abonnent des Netzwerks ist.

4. Vorrichtung nach Anspruch 1, Anspruch 2 oder Anspruch 3, wobei der wenigstens eine Entscheidungsfaktor eine Nachrichtenempfangs-Vorgeschichte des Nachrichtenempfängers (9) beinhaltet, wobei der Sender der Nachricht ein Abonnent des Netzwerks ist.

5. Vorrichtung nach einem der Ansprüche 1 bis 4, wobei der wenigstens eine Entscheidungsfaktor die verfügbare Nachrichtenübermittlungskapazität an einem oder mehreren Knoten (2, 3, 7, 8) des Netzwerks beinhaltet.

6. Vorrichtung nach einem der Ansprüche 1 bis 5, wobei der wenigstens eine Entscheidungsfaktor ein Maß der Nachrichtenübermittlungsbelastung an einem oder mehreren Knoten (2, 3, 7, 8) des Netzwerks beinhaltet.

7. Vorrichtung nach einem der Ansprüche 1 bis 6, welche eine Speichereinrichtung (3, 4) für das vorübergehende bzw. zeitweise Speichern von Adreßinformationen in Bezug auf einen ersten Versuch der Nachrichtenzustellung an einen ausgewählten Empfänger beinhaltet, wobei die Einrichtung zum Auswählen so betreibbar ist, daß sie die gespeicherten Adreßinformationen für eine anschließende Nachrichtenzustellung einer zweiten Nachricht an den gleichen ausgewählten Empfänger verwendet.

8. Vorrichtung nach Anspruch 7, wobei die gespeicherten Adreßinformationen eine IMSI und eine VLR-Adresse beinhalten.

9. Vorrichtung nach Anspruch 7 oder Anspruch 8, wobei die gespeicherten Adreßinformationen bevorzugt zum Abfragen eines HLR (6) des Netzwerks verwendet werden.

10. Vorrichtung nach Anspruch 7, Anspruch 8 oder Anspruch 9, wobei die gespeicherten Adreßinformationen nach einer Zeitdauer der Nichtbenutzung der Informationen oder falls ein Versuch der Nachrichtenzustellung unter Verwendung der gespeicherten Adreßinformationen nicht erfolgreich ist, annulliert werden.

11. Vorrichtung nach einem der Ansprüche 1 bis 10, welche einen von einem Mobiltelefon stammenden Speicher (5) in dem Netzwerk beinhaltet, wobei die versuchten oder erneut versuchten Zustellungen den von dem Mobiltelefon stammenden Speicher umfassen.

12. Vorrichtung nach einem der Ansprüche 1 bis 11, wobei ein auf ein Mobiltelefon gerichteter Speicher (10) in dem Netzwerk des Nachrichtenempfängers bereitgestellt wird und die versuchten oder erneut versuchten Zustellungen den auf das Mobiltelefon gerichteten Speicher umfassen.

13. Vorrichtung nach einem der Ansprüche 1 bis 12, wobei die Einrichtung zum Auswählen einen SMS-Router (3) beinhaltet.

14. Vorrichtung nach einem der Ansprüche 1 bis 13, wobei die Einrichtung zum Auswählen so betreibbar ist, daß sie die direkte Zustellung der empfangenen Textnachricht gemäß dem wenigstens einen Entscheidungsfaktor versucht.

15. Vorrichtung nach einem der Ansprüche 1 bis 14, wobei die Einrichtung zum Auswählen so betreibbar ist, daß sie eine alternative Gültigkeitszeitdauer für die erneut versuchte Zustellung einer empfangenen Textnachricht gemäß dem wenigstens einen Entscheidungsfaktor festlegt.

16. Vorrichtung nach einem der Ansprüche 1 bis 15, wobei die Einrichtung zum Auswählen so betreibbar ist, daß sie die Verfahren der Zustellung gemäß der Nachrichtenerfolgsrate adaptiv variiert.

17. Telekommunikationsverfahren für ein mobiles Telekommunikationsnetz, wobei das Verfahren das Empfangen einer Textnachricht für die Zustellung an ein beabsichtigtes Ziel (9) und das Auswählen eines aus einer Mehrzahl von Modi der versuchten oder erneut versuchten Zustellung für das Zustellen der Textnachricht an das beabsichtigte Ziel gemäß wenigstens einem Entscheidungsfaktor umfaßt, **dadurch gekennzeichnet, daß** der wenigstens eine Entscheidungsfaktor auf einem Kriterium basiert, welches kein Merkmal der gerade gesendeten Textnachricht ist, und daß das Verfahren das Implementieren eines modifizierten Wiederholungsplans als der ausgewählte Zustellungsmodus auf Basis des wenigstens einen Entscheidungsfaktors umfaßt.

18. Verfahren nach Anspruch 17, wobei der wenigstens eine Entscheidungsfaktor eine Benutzerklasse des Senders (1) und/oder eine Benutzerklasse des Empfängers (9) beinhaltet.

19. Verfahren nach Anspruch 17 oder Anspruch 18, wobei der wenigstens eine Entscheidungsfaktor eine Nachrichtenempfangs-Vorgeschichte des beabsichtigten Nachrichtenempfängers (9) beinhaltet, wobei der beabsichtigte Nachrichtenempfänger ein Abonnent des Netzwerks ist.

20. Verfahren nach Anspruch 17, Anspruch 18 oder Anspruch 19, wobei der wenigstens eine Entscheidungsfaktor eine Nachrichtenempfangs-Vorgeschichte des Nachrichtenempfängers (9) beinhaltet, wobei der Sender der Nachricht ein Abonnent des Netzwerks ist.

21. Verfahren nach einem der Ansprüche 17 bis 20, wobei der wenigstens eine Entscheidungsfaktor die verfügbare Nachrichtenübermittlungskapazität an einem oder mehreren Knoten (2, 3, 7, 8) des Netzwerks beinhaltet.

22. Verfahren nach einem der Ansprüche 17 bis 21, wobei der wenigstens eine Entscheidungsfaktor ein Maß der Nachrichtenübermittlungsbelastung an einem oder mehreren Knoten (2, 3, 7, 8) des Netzwerks beinhaltet.

23. Verfahren nach einem der Ansprüche 17 bis 22, welches das zeitweise Speichern von Adreßinformationen in Bezug auf einen ersten Versuch der Nachrichtenzustellung an einen ausgewählten Empfänger umfaßt, wobei die gespeicherten Adreßinformationen für die anschließende Nachrichtenzustellung einer zweiten Nachricht an den gleichen ausgewählten Empfänger verwendet werden.

24. Verfahren nach Anspruch 23, wobei die gespeicherten Adreßinformationen eine IMSI und eine VLR-Adresse beinhalten.

25. Verfahren nach Anspruch 23 oder Anspruch 24, wobei die gespeicherten Adreßinformationen bevorzugt zum Abfragen eines HLR (6) des Netzwerks verwendet werden.

26. Verfahren nach Anspruch 23, Anspruch 24 oder Anspruch 25, wobei die gespeicherten Adreßinformationen nach einer Zeitdauer der Nichtbenutzung der Informationen oder wenn ein Versuch der Nachrichtenzustellung unter Verwendung der gespeicherten Adreßinformationen nicht erfolgreich ist, annulliert werden.

27. Verfahren nach einem der Ansprüche 17 bis 26, wobei die versuchten oder erneut versuchten Zustellungen einen von einem Mobiltelefon stammenden Speicher (5) in dem Netzwerk umfassen.

28. Verfahren nach einem der Ansprüche 17 bis 27, wobei die versuchten oder erneut versuchten Zustellungen einen auf ein Mobiltelefon gerichteten Speicher (10) in dem Netzwerk des Nachrichtenempfängers umfassen.

29. Verfahren nach einem der Ansprüche 17 bis 28, wobei die Nachrichtenzustellung durch einen SMS-Router (3) durchgeführt wird.

30. Verfahren nach einem der Ansprüche 17 bis 29, wobei die direkte Zustellung der empfangenen Textnachricht gemäß dem wenigstens einen Entscheidungsfaktor versucht wird.

31. Verfahren nach einem der Ansprüche 17 bis 30, wobei eine alternative Gültigkeitszeitdauer für die erneut versuchte Zustellung einer empfangenen Textnachricht gemäß dem wenigstens einen Entscheidungsfaktor festgelegt wird.

32. Verfahren nach einem der Ansprüche 17 bis 31, wobei die Zustellungsverfahren gemäß der Nachrichtenerfolgsrate adaptiv variiert werden.

33. Computerprogramm mit computerausführbaren Anweisungen, das, wenn es auf einen Computer geladen wird, so betreibbar ist, daß es den Computer dazu bringt, das Verfahren nach einem der Ansprüche 17 bis 32 auszuführen.

34. Computerprogrammprodukt mit einem computerlesbaren Medium, auf dem Informationssignale aufgezeichnet sind, die das Computerprogramm nach Anspruch 33 repräsentieren.

## Revendications

1. Appareil de services de télécommunications destiné à être utilisé dans un réseau de télécommunications mobiles, l'appareil comprenant un moyen destiné à recevoir un message de texte destiné à être remis à une destination voulue (9) et un moyen destiné à sélectionner un mode parmi une pluralité de modes de tentative ou de nouvelle tentative de remise pour la remise du message de texte à la destination voulue, en fonction d'au moins un facteur de décision, **caractérisé en ce que** le au moins un facteur de décision est fondé sur un critère autre qu'une caractéristique du message de texte envoyé et **en ce que** le moyen de sélection est en mesure de mettre en oeuvre un calendrier modifié de nouvelles tentatives comme mode de remise sélectionné, sur la base du au moins un facteur de décision.

2. Appareil selon la revendication 1, dans lequel le au moins un facteur de décision comprend une catégorie de service de l'expéditeur (1) et/ou une catégorie de service du destinataire (9).

3. Appareil selon la revendication 1 ou la revendication 2, dans lequel le au moins un facteur de décision comprend un historique de réception de messages du destinataire voulu (9) du message, le destinataire voulu du message étant un abonné au réseau.

4. Appareil selon la revendication 1, la revendication 2 ou la revendication 3, dans lequel le au moins un facteur de décision comprend un historique de réception de messages du destinataire (9) du message, l'expéditeur du message étant un abonné au réseau.

5. Appareil selon l'une quelconque des revendications 1 à 4, dans lequel le au moins un facteur de décision comprend la capacité de signalisation disponible sur un ou plusieurs noeuds (2, 3, 7, 8) du réseau.

6. Appareil selon l'une quelconque des revendications 1 à 5, dans lequel le au moins un facteur de décision comprend une mesure de la charge de signalisation sur un ou plusieurs noeuds (2, 3, 7, 8) du réseau.

7. Appareil selon l'une quelconque des revendications 1 à 6, comprenant un moyen de stockage (3, 4) destiné à mémoriser temporairement des informations d'adressage concernant une première tentative de remise de message à un destinataire sélectionné, le moyen de sélection étant en mesure d'utiliser les informations d'adressage mémorisées pour une remise ultérieure d'un second message au même destinataire sélectionné.

8. Appareil selon la revendication 7, dans lequel les informations d'adressage mémorisées comprennent un identificateur IMSI et une adresse VLR.

9. Appareil selon la revendication 7 ou la revendication 8, dans lequel les informations d'adressage mémorisées sont utilisées de préférence pour interroger un registre HLR (6) du réseau.

10. Appareil selon la revendication 7, la revendication 8 ou la revendication 9, dans lequel les informations d'adressage mémorisées sont invalidées après une période de non-utilisation des informations ou lors de l'échec d'une tentative de remise de message utilisant les informations d'adressage mémorisées.

11. Appareil selon l'une quelconque des revendications 1 à 10, comprenant une mémoire de mobile d'origine (5) sur le réseau, les tentatives ou nouvelles tentatives de remise faisant intervenir la mémoire de mobile d'origine.

12. Appareil selon l'une quelconque des revendications 1 à 11, dans lequel une mémoire de mobile de destination (10) est fournie sur le réseau du destinataire du message et les tentatives ou nouvelles tentatives de remise font intervenir la mémoire de mobile de destination.

13. Appareil selon l'une quelconque des revendications 1 à 12, dans lequel le moyen de sélection comprend un routeur SMS (3).

14. Appareil selon l'une quelconque des revendications 1 à 13, dans lequel le moyen de sélection est en mesure de tenter une remise directe du message de texte reçu en fonction du au moins un facteur de décision.

15. Appareil selon l'une quelconque des revendications 1 à 14, dans lequel le moyen de sélection est en mesure de fixer une autre période de validité pour la nouvelle tentative de remise d'un message de texte reçu, en fonction du au moins un facteur de décision.

16. Appareil selon l'une quelconque des revendications 1 à 15, dans lequel le moyen de sélection est en mesure de modifier de manière adaptative les procédés de remise en fonction du taux de succès des messages.

17. Procédé de télécommunication pour un réseau de télécommunications mobiles, le procédé comprenant les étapes consistant à recevoir un message de texte destiné à être remis à une destination voulue (9) et à sélectionner un mode parmi une pluralité de modes de tentative ou de nouvelle tentative de remise pour la remise du message de texte à la destination voulue, en fonction d'au moins un facteur de décision, **caractérisé en ce que** le au moins un facteur de décision est fondé sur un critère autre qu'une caractéristique du message de texte envoyé et **en ce qu'**il comprend l'étape consistant à mettre en oeuvre un calendrier modifié de nouvelles tentatives comme mode de remise sélectionné, sur la base du au moins un facteur de décision.

18. Procédé selon la revendication 17, dans lequel le au moins un facteur de décision comprend une catégorie de service de l'expéditeur (1) et/ou une catégorie de service du destinataire (9).

19. Procédé selon la revendication 17 ou la revendication 18, dans lequel le au moins un facteur de décision comprend un historique de réception de messages du destinataire voulu (9) du message, le destinataire voulu du message étant un abonné au réseau.

20. Procédé selon la revendication 17, la revendication 18 ou la revendication 19, dans lequel le au moins un facteur de décision comprend un historique de réception de messages du destinataire (9) du message, l'expéditeur du message étant un abonné au réseau.

21. Procédé selon l'une quelconque des revendications 17 à 20, dans lequel le au moins un facteur de décision comprend la capacité de signalisation disponible sur un ou plusieurs noeuds (2, 3, 7, 8) du réseau.

22. Procédé selon l'une quelconque des revendications 17 à 21, dans lequel le au moins un facteur de décision comprend une mesure de la charge de signalisation sur un ou plusieurs noeuds (2, 3, 7, 8) du réseau.

23. Procédé selon l'une quelconque des revendications 17 à 22, comprenant l'étape consistant à mémoriser temporairement des informations d'adressage concernant une première tentative de remise de message à un destinataire sélectionné, les informations d'adressage mémorisées étant utilisées pour une remise ultérieure d'un second message au même destinataire sélectionné.

24. Procédé selon la revendication 23, dans lequel les informations d'adressage mémorisées comprennent un identificateur IMSI et une adresse VLR.

25. Procédé selon la revendication 23 ou la revendication 24, dans lequel les informations d'adressage mémorisées sont utilisées de préférence pour interroger un registre HLR (6) du réseau.

26. Procédé selon la revendication 23, la revendication 24 ou la revendication 25, dans lequel les informations d'adressage mémorisées sont invalidées après une période de non-utilisation des informations ou lors de l'échec d'une tentative de remise de message utilisant les informations d'adressage mémorisées.

27. Procédé selon l'une quelconque des revendications 17 à 26, dans lequel les tentatives ou nouvelles tentatives de remise font intervenir une mémoire de mobile d'origine (5) du réseau.

28. Procédé selon l'une quelconque des revendications 17 à 27, dans lequel les tentatives ou nouvelles tentatives de remise font intervenir une mémoire de mobile de destination (10) sur le réseau du destinataire du message.

29. Procédé selon l'une quelconque des revendications 17 à 28, dans lequel la remise du message est assurée par un routeur SMS (3).

30. Procédé selon l'une quelconque des revendications 17 à 29, dans lequel la remise directe du message de texte reçu est tentée en fonction du au moins un facteur de décision.

31. Procédé selon l'une quelconque des revendications 17 à 30, dans lequel une autre période de validité est définie pour la nouvelle tentative de remise d'un message de texte reçu, en fonction du au moins un facteur de décision.

32. Procédé selon l'une quelconque des revendications 17 à 31, dans lequel les procédés de remise sont modifiés de manière adaptative en fonction du taux de succès des messages.

33. Programme d'ordinateur possédant des instructions exécutables par ordinateur qui, lorsqu'elles sont chargées sur un ordinateur, sont en mesure de commander à l'ordinateur d'exécuter le procédé selon l'une quelconque des revendications 17 à 32.

34. Produit à programme d'ordinateur possédant un support lisible par ordinateur, des signaux d'information représentatifs du programme d'ordinateur selon la revendication 33 étant enregistrés sur ce support.
